# EUROPEAN PATENT SPECIFICATION

(11) **EP 0 770 999 B1**
(45) Date of publication and mention of the grant of the patent: **06.02.2002**
(21) Application number: 96307599.9
(22) Date of filing: 18.10.1996
(51) Int. Cl.: G11B 19/20, F16D 1/06

(54) **Hard disc drive with a compound bearing assembly**
Festplattenantrieb mit zusammengesetzter Lagereinheit
Entraînement de disque dur à palier composé

(30) Priority: 20.10.1995 JP 29739195
(43) Date of publication of application: 02.05.1997
(73) Proprietor: Minebea Kabushiki Kaisha, Kitasaku-gun, Nagano-ken (JP)
(72) Inventor: Obara, Rikuro, c/o Minebea K. K., Kitasaku-gun, Nagano-ken (JP)
(74) Representative: Warren, Keith Stanley

(56) References cited:
- EP-A- 0 613 134
- WO-A-91/19288
- DE-A- 3 540 363
- US-A- 4 874 976
- US-A- 4 907 897
- US-A- 5 341 569
- US-E- R E34 684

## Description

This invention relates to improvements in the motor of a hard disc drive.

In a prior art hard disc drive motor, a bearing assembly is provided between a motor shaft and a rotor hub.

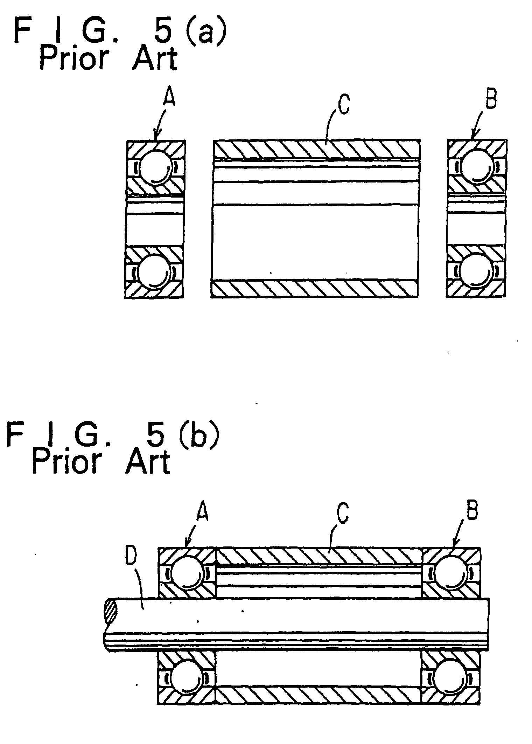

A prior art compound bearing assembly, as shown in Figs. 5(a) and 5(b), comprises two ball bearing units A and B and a sleeve-like spacer C. These components are produced separately and supplied to the user, e.g. a hard disc drive manufacturer, for assembling on a motor shaft D.

With such a conventional bearing assembly for use with a hard disc drive motor, it is necessary for the hard disc drive manufacturer to assemble the two ball bearing units on the motor shaft separately by a spacer. This poses the following problems.
(a) The motor shaft has to be prepared with its outer diameter sized to match that of the inner race rings of the ball bearing units.
(b) The spacer is a separate component from the two ball bearing units. To be able to fit the spacer between the ball bearing units the end faces of the spacer must be highly accurately finished, so as to be both flat and parallel.
(c) Since the spacer is only clamped between the outer race rings of the two ball bearing units, when it is assembled by the user, highly accurate assembling is required to mount the spacer concentrically with the motor shaft.

Unless all the above requirements are fully met, vibrations of the motor shaft and the disc may result. Therefore, it is impossible to obtain a hard disc drive having excellent rotational performance, but vibrations of the motor shaft or the disc may result.

An object of the invention is to provide a hard disc drive having improved performance, by addressing the problems discussed above. It is an advantage of the present invention that the compound bearing assembly obtained, as a complete product after assembling of components, is usable directly on a motor by, for example, the disc drive manufacturer.

A further prior art hard disc drive bearing assembly (on which the preamble of claim 1 is based) is described in Patent US 5341569. The bearing assembly includes a step diameter shaft with an inner ring of a bearing construction having an inner raceway formed around its exterior mounted on a smaller diameter portion thereof and an inner raceway formed around a larger diameter portion thereof. Sets of balls run between the two inner raceways and outer raceways both of which are formed on the interior of a single outer race ring.

According to the invention there is provided a hard disc drive comprising a compound bearing assembly including:
a stepped shaft having a first portion having a larger diameter than a second portion, said larger diameter portion having an inner raceway groove formed directly in outer periphery thereof;
an outer race ring surrounding said larger diameter portion of said stepped shaft and having an outer raceway groove formed in the periphery thereof;
a plurality of balls provided between said inner and outer raceway grooves; and
a ball bearing construction having an inner race ring an outer raceway and a plurality of balls provided therebetween, said inner race ring of said ball bearing construction being fitted on said smaller diameter portion of said stepped shaft;
said outer race ring and said ball bearing construction being assembled into said compound bearing assembly, said larger diameter portion of said stepped shaft having a stem thereof secured to a base member of the hard disc drive, substantially at right angles thereto, said motor of the hard disc drive having a rotor having a central hub thereof fitted on and secured to said compound bearing assembly,
characterised in that said ball bearing construction is part of a ball bearing unit having an outer race ring in which said outer raceway is formed and in that said compound bearing assembly further comprises
a sleeve-like spacer surrounding said stepped shaft having opposite end portions with smaller diameters than a main body diameter of said sleeve, said outer race ring surrounding said larger diameter portion of said shaft and said outer race ring of said ball bearing unit being fitted on said opposite end smaller diameter portions of said sleeve-like spacer, respectively.

In an embodiment of the invention, the inner race ring of the ball bearing unit and the large-diameter portion of the stepped shaft have an equal outer diameter, and the outer race ring of the ball bearing unit have equal outer and inner diameters to the outer and inner diameters, respectively, of the outer race ring surrounding the large-diameter portion, so that all the balls are the same in diameter.

Embodiments of the present invention will now be described, by way of example, with reference to the drawings, in which:-
Fig. 1 is a perspective view showing a hard disc drive;
Fig. 2 is a sectional view showing an embodiment of an outer rotor type motor in the hard disc drive in accordance with the invention;
Fig. 3 is a sectional view showing an embodiment of an inner rotor type motor in the hard disc drive in accordance with the invention;
Fig. 4 is a sectional view showing the bearing assembly of a motor used for the hard disc drive in accordance with the invention; and
Figs. 5(a) and 5(b) are sectional views showing a prior art bearing assembly, Fig. 5(a) showing two ball bearing units and a spacer before assembling, Fig. 5(b) showing the ball bearing units and spacer assembled on a motor shaft.

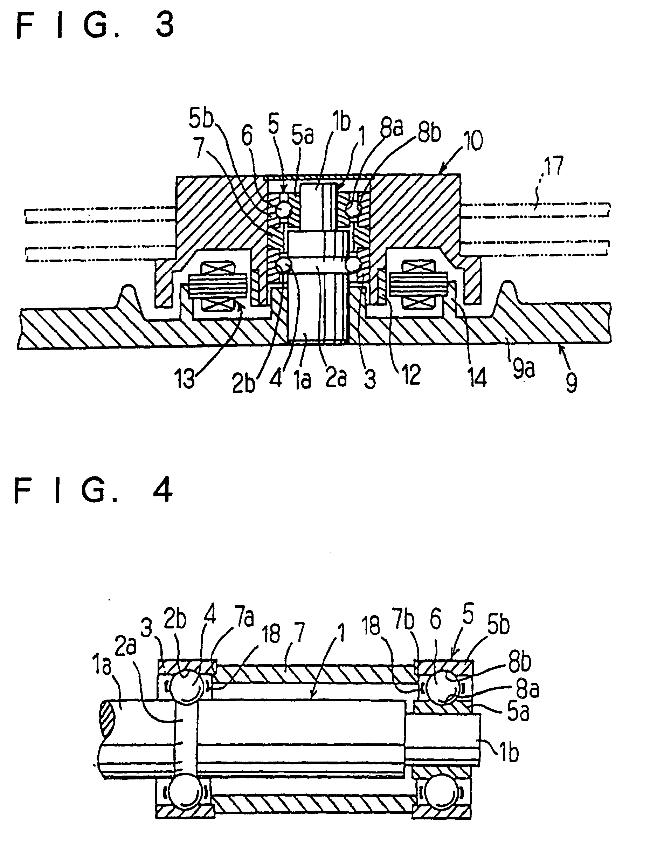

A hard disc drive in accordance with the invention uses a novel bearing assembly as shown in Fig. 4, as a motor bearing assembly. This bearing assembly will now be described. Referring to Fig. 4, a stepped shaft 1 which has a first portion 1a with a larger diameter that a second portion 1 b, the larger diameter portion 1a having an inner raceway groove 2a directly formed in the outer periphery thereof.

An outer race ring 3 is provided on the larger diameter portion 1a. The outer race ring 3 is assembled on the larger diameter portion 1 a with a plurality of balls 4 provided between an outer raceway groove 2b formed in its inner periphery and the inner raceway groove 2a of the larger diameter portion 1 a.

A ball bearing unit 5 having a conventional structure, having an inner and an outer race ring 5a and 5b and a plurality of balls 6 provided therebetween, has its inner race ring 5a fitted on and secured to the smaller diameter portion 1b of the stepped shaft 1.

A sleeve-like spacer 7 surrounds the stepped shaft 1. The spacer 7 has opposite end small-diameter portions 7a and 7b, which have such an outer diameter that they properly fit in the outer race rings 3 and 5b, respectively. The spacer 7 is secured in position by fitting its small diameter portions 7a and 7b in the outer race ring 3 and the outer race ring 5b of the ball bearing unit 5, respectively.

The inner race ring 5a of the ball bearing unit 5 has an equal outer diameter to the outer diameter of the larger diameter portion 1 a of the stepped shaft 1, and the outer race ring 5b of the ball bearing unit 5 has equal outer and inner diameters to those of the outer race ring 3 on the larger diameter portion 1 a, so that the balls 4 and 6 may be of the same diameter.

In constructing the bearing assembly, the inner race ring 5a of the ball bearing unit 5 is initially slidably fitted on to the small diameter portion 1b of the stepped shaft 1. Then, an adequate pre-load is applied to the outer or right end surface (see Fig. 4) of the inner race ring 5a, and in this state the inner race ring 5a is secured by means of an adhesive to the small-diameter portion 1 b of the stepped shaft 1. In this way, the outer race ring 3, the spacer 7 and the ball bearing unit 5 are assembled on the stepped shaft 1.

Reference symbols 8a and 8b designate the raceway grooves of the inner and outer race rings 5a and 5b of the ball bearing unit 5.

While in the above embodiment the balls 4 and 6 were of the same diameter, it is possible to use balls having different diameters for the sides of the larger and smaller diameter portions 1a and 1b.

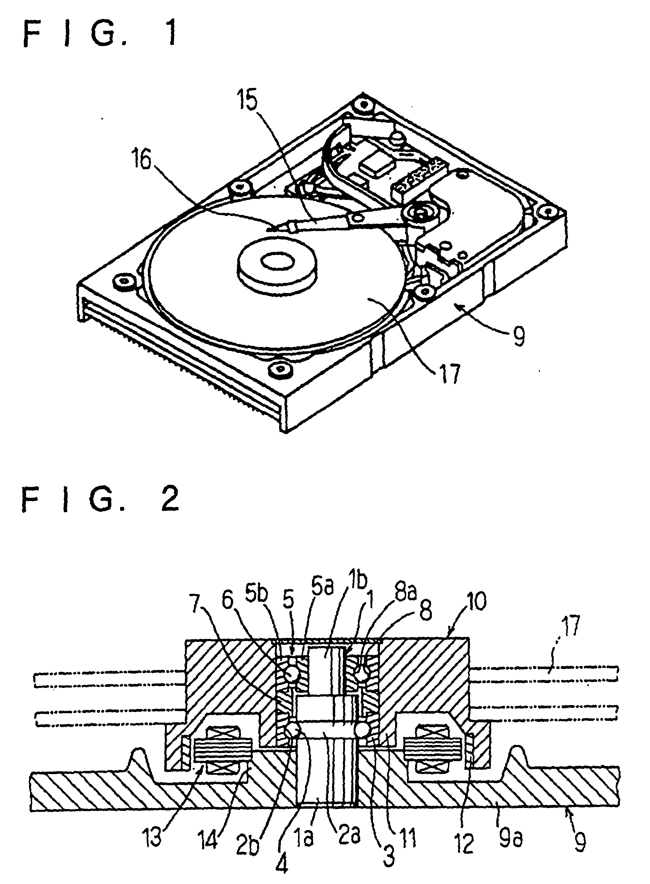

As shown in Fig. 2, the lower end of the stepped shaft 1 in the bearing assembly completed in the above way is secured to a base 9a of a casing 9, and then a central hub 11 of a rotor 10 of a motor is fitted on and secured to the outer race rings 3 and 5b of the bearing assembly.

A magnet 12, a stator yoke 13 with an energizing coil wound thereon, and a yoke holder 14, a swing arm 15 with a magnetic head 16 mounted at the end, and a magnetic disc 17 are also illustrated in Figs. 1 and 2.

While the above embodiment concerns an outer rotor type motor in which the magnet 12 is provided on the inner periphery of the hub 11 of the rotor 10, the invention is also applicable to an inner rotor type motor in which the magnet is provided on the outer periphery of the rotor hub.

With the hard disc drive with the bearing assembly of the motor having the construction as described in the foregoing, the following advantageous functions and effects are obtainable.
(1) Since the ball bearing unit, the outer race ring, the balls, the sleeve-like spacer and the stepped shaft of the compound bearing assembly are assembled together by the bearing manufacturer, it is not necessary for the user to assemble these components, and the rotor of the motor can be readily mounted on the bearing assembly by fitting and securing the hub of the motor with respect to the outer race rings of the bearing assembly.
(2) It is thus possible to provide a hard disc drive, which can minimize vibrations of the motor shaft and the disc.
(3) Since the larger diameter portion of the stepped shaft in the bearing assembly has the inner raceway groove directly formed in its outer periphery, the conventional inner ring is unnecessary, and correspondingly the shaft is partly increased in diameter to provide the stepped shaft, which thus has increased rigidity.
(4) Since the stepped shaft has the larger diameter portion and has increased rigidity, the resonance point of the shaft can be raised compared to those of the other components to prevent resonance with the other components and thus improve the performance and reliability of the motor.
(5) The bearing assembly needs only a single conventional bearing unit, and hence only a single inner race ring and thus comprises a reduced number of components.
(6) Since the larger diameter portion of the stepped shaft has the inner raceway groove directly formed in its outer periphery, no inner race ring is needed for the larger diameter portion side. The lack of a need for an inner race ring permits corresponding reduction of the outer diameter of the outer race ring. It is thus possible to provide a compact hard disc drive, as desired.

## Claims

1. A hard disc drive comprising a compound bearing assembly including:
a stepped shaft (1) having a first portion (1a) having a larger diameter than a second portion (1b), said larger diameter portion (1a) having an inner raceway groove (2a) formed directly in the outer periphery thereof;
an outer race ring (3) surrounding said larger diameter portion (1a) of said stepped shaft (1) and having an outer raceway groove (2b) formed in the periphery thereof;
a plurality of balls (4) provided between said inner and outer raceway grooves (2a, 2b); and
a ball bearing construction having an inner race ring (5a) an outer raceway (8b) and a plurality of balls (6) provided therebetween, said inner race ring (5a) of said ball bearing construction being fitted on said smaller diameter portion (1b) of said stepped shaft (1);
said outer race ring (3) and said ball bearing construction being assembled into said compound bearing assembly, said larger diameter portion (1a) of said stepped shaft (1) having a stem thereof secured to a base member (9a) of the hard disc drive, substantially at right angles thereto, said motor of the hard disc drive having a rotor (10) having a central hub (11) thereof fitted on and secured to said compound bearing assembly,
**characterised in that** said ball bearing construction is part of a ball bearing unit (5) having an outer race ring (5b) in which said outer raceway (8b) is formed and **in that** said compound bearing assembly further comprises
a sleeve-like spacer (7) surrounding said stepped shaft (1) having opposite end portions (7a, 7b) with smaller diameters than a main body diameter of said sleeve, said outer race ring (3) surrounding said larger diameter portion (1a) of said shaft (1) and said outer race ring (5b) of said ball bearing unit (5) being fitted on said opposite end smaller diameter portions (7a, 7b) of said sleeve-like spacer (7), respectively.

2. A hard disc drive assembly as claimed in claim 1, wherein said inner race ring (5a) of said ball bearing unit (5) and said larger diameter portion (1a) of said stepped shaft (1) have a substantially equal outer diameter, and the outer and inner diameters of said outer race ring (5b) of said ball bearing unit (5) and said outer racer ring surrounding said larger diameter portion of said shaft (1) are substantially equal, so that said balls (4,6) may be the same in diameter.

## Patentansprüche

1. Festplattenlaufwerk umfassend einen zusammengesetzten Lagerbausatz, der folgendes einschließt:
einen abgestuften Schaft (1) mit einem ersten Abschnitt (1a), der einen größeren Durchmesser aufweist als ein zweiter Abschnitt (1b), wobei der Abschnitt (1a) mit dem größeren Durchmesser eine Innenlaufbahnrille (2a) aufweist, die direkt im Außenumfang davon gebildet wird;
einen Außenlaufring (3), der den Abschnitt (1a) mit dem größeren Durchmesser des abgestuften Schafts (1) umgibt und eine Außenlaufbahnrille (2b) aufweist, die im Umfang davon gebildet wird;
eine Vielzahl an Kugeln (4), die zwischen der Innenlaufbahnrille und der Außenlaufbahnrille (2a, 2b) bereitgestellt werden; und
eine Kugellagerkonstruktion mit einem Innenlaufring (5a), einer Außenlaufbahn (8b) und einer Vielzahl an Kugeln (6), die dazwischen bereitgestellt werden, wobei der Innenlaufring (5a) der Kugellagerkonstruktion auf dem Abschnitt (1b) mit dem kleinen Durchmesser des abgestuften Schafts (1) angebracht wird;
wobei der Außenlaufring (3) und die Kugellagerkonstruktion in den zusammengesetzten Lagerbausatz zusammengebaut werden, wobei ein Stiel des Abschnitts (1a) mit dem größeren Durchmesser des abgestuften Schafts (1) an einem Grundelement (9a) des Festplattenlaufwerks im wesentlichen in rechten Winkeln dazu befestigt ist, wobei der Motor des Festplattenlaufwerks einen Rotor (10) aufweist, dessen mittlerer Kranz (11) auf dem zusammengesetzten Lagerbausatz angebracht und befestigt ist,
**dadurch gekennzeichnet, daß** die Kugellagerkonstruktion Teil einer Kugellagereinheit (5) ist, die einen Außenlaufring (5b) aufweist, in dem die Außenlaufbahn (8b) gebildet ist, und dadurch, daß der zusammengesetzte Lagerbausatz des weiteren folgendes umfaßt:
einen muffenähnlichen Abstandhalter (7), der den abgestuften Schaft (1) umgibt, mit gegenüberliegenden Endabschnitten (7a, 7b) mit kleineren Durchmessern als der Durchmesser eines Hauptkörpers der Muffe, wobei der Außenlaufring (3), der den Abschnitt (1a) mit dem größeren Durchmesser des Schafts (1) umgibt, und der Außenlaufring (5b) der Kugellagereinheit (5) auf den gegenüberliegenden Endabschnitten (7a, 7b) mit kleinerem Durchmesser des muffenähnlichen Abstandhalters (7) befestigt sind.

2. Festplattenlaufwerkbausatz nach Anspruch 1, wobei der Innenlaufring (5a) der Kugellagereinheit (5) und der Abschnitt (1a) mit dem größeren Durchmesser des abgestuften Schafts (1) einen im wesentlichen gleichen Außendurchmesser aufweisen, und der Außendurchmesser und der Innendurchmesser des Auβenlaufrings (5b) der Kugellagereinheit (5) und des Außenlaufrings, der den Abschnitt mit dem größeren Durchmesser des Schafts (1) umgibt, im wesentlichen gleich sind, so daß die Kugeln (4, 6) denselben Durchmesser aufweisen können.

## Revendications

1. Ensemble d'entraînement de disque dur, comprenant un ensemble combiné de roulements comprenant :
un arbre étagé (1) comportant une première partie (1a) présentant un diamètre plus grand qu'une seconde partie (1b), ladite partie à diamètre plus grand (1a) comportant une gorge d'anneau de roulement intérieure (2a) formée directement sur la périphérie extérieure de celle-ci,
une bague de roulement extérieure (3) entourant ladite partie de diamètre plus grand (1a) dudit arbre étagé (1) et comportant une gorge d'anneau de roulement extérieure (2b) formée à la périphérie de celle-ci,
une pluralité de billes (4) prévues entre lesdites gorges de roulement intérieure et extérieure (2a, 2b), et
un ensemble de roulement à billes comportant une bague de roulement intérieure (5a), un anneau de roulement extérieur (8b) et une pluralité de billes (6) disposées entre ceux-ci, ladite bague de roulement intérieure (5a) dudit ensemble de roulement à billes étant ajustée sur ladite partie à diamètre plus petit (1b) dudit arbre étagé (1),
ladite bague de roulement extérieure (3) et ledit ensemble de roulement à billes étant assemblés dans ledit ensemble combiné de roulements, ladite partie de plus grand diamètre (1a) dudit arbre étagé (1) ayant une queue de celui-ci fixée à un élément de base (9a) de l'ensemble d'entraînement de disque dur, sensiblement à angle droit avec celui-ci, le moteur dudit ensemble d'entraînement de disque dur comportant un rotor (10) comprenant un moyeu central (11) de celui-ci ajusté sur ledit ensemble combiné de roulements et fixé à celui-ci,
**caractérisé en ce que** ledit ensemble de roulement à billes fait partie d'une unité de roulement à billes (5) comportant une bague de roulement extérieure (5b) dans laquelle est formé ledit anneau de roulement extérieur (8b), et **en ce que** ledit ensemble combiné de roulements comprend en outre:
une pièce d'écartement en forme de manchon (7) entourant ledit arbre étagé (1), qui comporte des parties d'extrémité opposées (7a, 7b) présentant des diamètres plus petits que le diamètre du corps principal dudit manchon, ladite bague de roulement extérieure (3) entourant ladite partie de plus grand diamètre (1a) dudit arbre (1) et ladite bague de roulement extérieure (5b) de ladite unité de roulement à billes (5) étant ajustées sur lesdites parties d'extrémité opposées à diamètre plus petit (7a, 7b) de ladite pièce d'écartement de type manchon (7), respectivement.

2. Ensemble d'entraînement de disque dur selon la revendication 1, dans lequel ladite bague de roulement intérieure (5a) de ladite unité de roulement à billes (5) et ladite partie de plus grand diamètre (1a) dudit arbre étagé (1) présentent un diamètre extérieur sensiblement égal, et les diamètres extérieur et intérieur de ladite bague de roulement extérieure (5b) de ladite unité de roulement à billes (5) et ladite bague de roulement extérieure entourant ladite partie de plus grand diamètre dudit arbre (1) sont sensiblement égaux, de sorte que lesdites billes (4, 6) peuvent être de diamètres identiques.
